# EUROPEAN PATENT APPLICATION

(11) **EP 2 273 174 A2**
(43) Date of publication of application: **12.01.2011**
(21) Application number: 10251233.2
(22) Date of filing: 09.07.2010
(51) Int. Cl.: F16L 25/01, F16L 33/01, F16L 25/00

(54) **Compression seal**

(30) Priority: 10.07.2009 GB 0912063; 12.01.2010 GB 1000441
(71) Applicant: Poulton, Adrian Roger, West Midlands B94 5NU (GB)
(72) Inventor: Poulton, Adrian Roger, West Midlands B94 5NU (GB)
(74) Representative: Coles, Pamela Ruth

(57) **Abstract**

A compression seal (10), for a conduit fitting comprising a body and an insert, is disclosed. The compression seal (10) comprises an annular trunk (12) having a first end (14), a second end (16) and an outwardly bulbous section (18) therebetween. A sealing surface (20) is provided on an outer portion of the bulbous section (18) and a resiliently deformable element (22) is provided at or adjacent the first end (14) of the trunk (12). An assembly comprising a first conduit, a second conduit and a fitting including a compression seal as described above, is also disclosed.

## Description

### Field of the Invention

This invention relates to a compression seal. Particularly, but not exclusively, the invention relates to a compression seal for use in a compression fitting for a plastic coated metal conduit requiring electrical continuity.

### Background to the Invention

A compression seal is typically used in a fitting (e.g. a connector or cable gland) for a conduit in the form of a pipe, tube, hose, cable or similar element, where that element passes from one environment to another. It will be noted that the conduit could be configured for the passage of a fluid (e.g. in the form of a liquid or gas) or a solid (e.g. in the form of a powder), or it may be configured for the transportation of electricity. The fitting may therefore serve to prevent leakage of a fluid or solid flowing through the element and/or it may serve to prevent ingress of an external fluid (e.g. water or air) into the element. It may also serve to electrically connect or isolate one part of the element/fitting from another part of the element/fitting and it may prevent movement of the element due to a pressure differential.

A particular characteristic of a compression seal fitting is that it employs mechanical components to exert an axial force on a deformable seal such that it flexes to form an impervious boundary between the fitting and the element. Typically, the seal itself would be made from plastic. However, in certain environments (such as those exposed to high temperatures or hazardous environments) plastic is not suitable for use in the fitting. The use of deformable metal seals has therefore been proposed but this has presented two significant problems. The first problem is that, if the fitting is used to connect to a plastic coated conduit, the edge of the metal seal tends to cut into and damage the plastic when the seal is compressed. The second problem is that the tolerance between the seal and the fitting becomes critical since there is much less 'give' in a metal-to-metal contact than there is in a plastic-to-metal contact and, if the contact between the parts is not sufficient, leakage could occur and/or electrical conductivity could be lost.

More specifically, when the fitting is employed with a plastic coated metal conduit requiring electrical continuity, a metal insert is provided that screws onto the end of the conduit and is forced by the seal into contact with the fitting body to thereby ensure electrical continuity therethrough. However, if the compression seal and/or insert are slightly larger than required (due manufacturing tolerances) the seal will contact the insert and force it into contact with the body of the fitting before the seal contacts the body of the fitting to provide the required seal with the fitting body to prevent water from entering the conduit. Conversely, if the seal and/or insert are slightly smaller than required (due manufacturing tolerances) the seal will contact the fitting body to form the required seal before contacting the insert to force it into contact with the body to provide the required electrical continuity. In either case, the metal seal will be unable to form the two functions it is designed to serve and the fitting will fail.

It is therefore an aim of the present invention to provide a compression seal that addresses the above-mentioned problems.

### Summary of the Invention

According to a first aspect of the present invention there is provided a compression seal for a conduit fitting comprising a body and an insert, the compression seal comprising an annular trunk having a first end, a second end and an outwardly bulbous section therebetween; a sealing surface is provided on an outer portion of said bulbous section; and wherein a resiliently deformable element is provided at or adjacent the first end of the trunk.

In embodiments of the invention, the resiliently deformable element will act as a spring such that, in use, the resiliently deformable element will be arranged to take up manufacturing tolerances by compressing and, at the same time, exerting an axial restoring force to urge the insert against the body of the fitting when the sealing surface is in sealing contact with the body of the fitting.

The above aspect of the present invention therefore provides for a reliable compression seal since it is significantly less reliant on manufacturing tolerances than current seals, in order to ensure the required sealing function as well as the required forced contact with the insert. It will be understood that this second function is achieved by calculating an acceptable predetermined range of compression (based on the manufacturing tolerances of each cooperating part of the fitting) to ensure that there is always adequate contact between the insert and the seal even if both components are of the minimum likely dimension due to manufacturing tolerances.

It will be understood that the mating of the seal with the body is required in order to ensure there are no gaps through which fluids or solids can leak (or be introduced). Where the seal is used in a fitting for a plastic coated conduit requiring electrical continuity, it is necessary for the compression seal to transmit axial force to the insert to ensure that the insert abuts the body of the fitting to thereby provide electrical continuity between the conduit and the body, via the insert.

Advantageously, the resiliently deformable element may restore to its uncompressed state after use and, as such, it may be possible to re-use the seal. Thus, the seal may be configured for single or multiple uses.

It will be noted that embodiments of the present invention not only require a high level of compressible strength (to withstand compression during use) but also a relatively high level of tensile strength since the seal must be capable of resisting fracture or other damage if the conduit is inadvertently pulled outwardly of the fitting, when in use.

The design of the present invention is not only effective when made from plastic but it is also particularly effective when made from other materials such as metal, which are harder and less able to take up manufacturing tolerances through natural distortion.

In one embodiment, the compression seal is formed from brass. The compression seal may be formed from metal that has been annealed.

In a particular embodiment, the resiliently deformable element comprises one or more slots or holes provided adjacent the first end of the trunk. The slots may be fully enclosed by the material of the resiliently deformable element or they may have an open end at the first end of the trunk. The slots may be part-annular or they may extend generally in an axial direction. The slots may extend perpendicularly to the first end or they may be sloped thereto. In certain embodiments, the slots may be V-shaped or U-shaped. Two or more part-annular slots may be provided at the same axial position so as to form a discontinuous ring of slots around the trunk. Two or more discontinuous rings of slots may be provided, each spaced axially from the other. In one embodiment, each discontinuous ring of slots is arranged such that only a portion of each slot is axially aligned with a portion of an adjacent slot. In other words, each slot is arranged to axially overlap with a slot in an adjacent ring of slots. This arrangement is advantageous in providing a sufficient range of compression whilst maintaining a desired degree of resilient strength to restore the seal to its uncompressed state.

In an alternative embodiment, a spiral slot may be provided adjacent the first end of the trunk.

It will be understood that the slots in the above embodiments allow the seal to compress axially by flexing of the material surrounding the slots into the spaces provided by the slots. The material between the slots provides the restoring force to urge the seal back to its uncompressed state.

The second end of the trunk may be formed into a collar extending in an axial direction. An advantage of such a collar is that, when a compression nut is applied to the fitting in use, the inner surface of the nut will apply a radial force to the second end and the collar will dissipate the radial force along a conduit held therein rather than simply transmitting the radial force to the conduit in a concentrated manner via the second end. Accordingly, the collar serves to prevent the second end from being forced directly into the conduit and causing damage thereto.

An annular channel may be provided in the inner surface of the compression seal, radially opposite to the outwardly bulbous section. Thus, the inner surface of the outwardly bulbous section may effectively be hollowed out. This structure helps to ensure that the first and second ends of the trunk can flex in use to effect the required contact and sealing characteristics. Alternatively, the bulbous section may be solid.

The bulbous section may be substantially in the form of a half hexagon when viewed in cross-section. This shape is advantageously strong and particularly suitable for transmitting an effective sealing force through the sealing surface, which may be provided on a sloped side of the half hexagon closest to the first end.

The resiliently deformable element can be constituted by a tolerance-reduction means. The tolerance-reduction means may be arranged, in use, to provide an overlap with the insert, in one or both of an axial and a radial direction.

In a specific embodiment, the overlap will be arranged to ensure an interference fit between the insert and seal when the sealing surface is in sealing contact with the body of the fitting. Such embodiments of the present invention provide for a reliable compression seal since it is significantly less reliant on manufacturing tolerances than current seals, in order to ensure the required sealing function as well as the required forced contact with the insert. It will be understood that this second function is achieved by calculating an acceptable predetermined range of overlap (based on the manufacturing tolerances of each cooperating part of the fitting) to ensure that there is always an adequate overlap between the insert and the seal even if both components are of the minimum likely dimension due to manufacturing tolerances.

In a particular embodiment, the tolerance-reduction means is constituted by an annular neck projecting axially from the first end of the trunk. The neck may have a transverse dimension of less than the first end of the trunk so as to allow the neck to flex relative to the first end. The neck may project from an inner or an outer portion of the first end. Alternatively, the neck may project from a location between the inner and outer portions of the first end. The neck may be continuous or may include cut-outs.

According to a second aspect of the present invention there is provided a fitting comprising a body, an insert and a compression seal in accordance with the first aspect of the invention.

The body may comprise a first hollow cylinder having a first diameter and a second hollow cylinder having a second diameter, the first and second diameters being different such that a radial flange is provided therebetween. The first and second hollow cylinders may be threaded on at least part of their respective outer surfaces.

The insert may comprise a radially flat annular base sized to fit within one of the first or second cylinders of the body and to abut the radial flange thereof. A hollow outer cylindrical shaft may extend from the outer circumference of the base. The outer cylindrical shaft may comprise an axially aligned ribbed outer surface. In some of the above described embodiments, it will be understood that the free end of the outer cylindrical shaft will be arranged to mate with the first end of the compression seal, when in use. In other embodiments, the free end of the outer cylindrical shaft may have an annular projection extending axially therefrom. The projection may have a transverse dimension of less than the free end of the shaft so as to allow the projection to flex. The projection may project from an inner or an outer portion of the free end. Alternatively, the projection may project from a location between the inner and outer portions of the free end. The projection may be continuous or may include cut-outs. In some of the above described embodiments, it will be understood that the projection on the insert will be arranged to form the overlap with the tolerance-reduction means of the compression seal, when in use.

A hollow inner cylindrical shaft may extend from the inner circumference of the base in the same direction as the outer cylindrical shaft. A single spiral projection may be provided on the outer surface of the inner cylindrical shaft, towards the free end thereof. In use, the spiral projection will be arranged to locate on an inner surface of a conduit applied to the fitting, to retain the conduit and ensure good electrical continuity between the conduit and the insert.

The insert may be formed from metal and may be un-annealed.

The fitting may further comprise a compression nut. The compression nut may be configured for screw-fit engagement with the larger of the first or second cylinders of the body. The end of the compression nut furthest from the body, when in use, may be provided with an inwardly extending radial lip.

It will be understood that, in use, the insert will be placed in the body with its annular base adjacent the radial flange of the body. The first end of the compression seal will then be placed into the body such that the resiliently deformable element is located adjacent the outer cylindrical shaft of the insert and the sealing surface of the compression seal is adjacent the free end of the body. The compression nut will then be positioned over the bulbous section of the compression seal and screwed onto the body. Upon tightening of the nut, the lip will apply an axial force to the compression seal to urge the sealing surface into contact with the free end of the body and at the same time force the resiliently deformable element to compress or overlap in interference fit with the insert. This in turn will generate a restoring force which will urge the insert against the radial flange of the body to secure it thereto. In addition, the lip with apply a radial force to the collar of the compression seal.

According to a third aspect of the present invention there is provided an assembly comprising a first conduit, a second conduit and a fitting therebetween in accordance with the second aspect of the invention.

The first and/or second conduits may be made from metal and/or plastics material.

In a particular embodiment, the first and second conduits are electrically conductive. In which case, the first and/or second conduit may comprise an electrically conductive element embedded in a sheath of hollow cylindrical plastics material. In use, the inner cylindrical shaft of the insert is configured to locate against the inner surface of the plastics sheath such that the end of the first or second conduit (and the electrical contact therein) abuts the annular base of the insert. As described above in relation to the fitting, tightening of the compression nut will force the compression seal into contact with the insert and this will urge the insert into contact with the radial flange of the body thereby ensuring good electrical continuity between the insert and the body.

### Brief Description of the Drawings

Certain embodiments of the present invention are described below in relation to the accompanying drawings, in which:
Figure 1 shows an enlarged perspective view of a compression seal according to an embodiment of the present invention;
Figure 2 shows a longitudinal cross-sectional view of an upper half of a fitting body for use in a fitting employing the compression seal of Figure 1;
Figure 3 shows a longitudinal cross-sectional view of an upper half of an insert for use in a fitting employing the compression seal of Figure 1;
Figure 4 shows a longitudinal cross-sectional view of an upper half of the compression seal shown in Figure 1;
Figure 5 shows a longitudinal cross-sectional view of an upper half of a compression nut for use in a fitting employing the compression seal of Figure 1;
Figure 6 shows a longitudinal cross-sectional view of an upper half of a fitting including the fitting body of Figure 2, the insert of Figure 3 and the compression nut of Figure 5, employing a conventional compression seal, with a plastic coated metal conduit (requiring electrical continuity) placed in the fitting and the compression nut tightened;
Figure 7A shows a view similar to that of Figure 6 wherein the conventional compression seal has been replaced by the compression seal of Figures 1 and 4 and the compression nut has yet to be tightened;
Figure 7B shows a view similar to that of Figure 7A after the compression nut has been tightened;
Figures 8A through 8E show side views of various compression seals according to further embodiments of the invention, each comprising a different resiliently deformable element;
More specifically, Figure 8A shows a seal having a resiliently deformable element comprising a series of axially extending V-shaped slots;
Figure 8B shows a seal having a resiliently deformable element comprising a series of sloped slots extending from the first end of the trunk to the edge of the bulbous section;
Figure 8C shows a seal having a resiliently deformable element comprising a series of circular holes disposed in three axially spaced rings;
Figure 8D shows a seal having a resiliently deformable element comprising a series of slots extending perpendicularly from the first end of the trunk and terminating part-way towards the edge of the bulbous section;
Figure 8E shows a seal having a resiliently deformable element comprising a series of sloped slots extending from the first end of the trunk and terminating part-way towards the edge of the bulbous section;
Figure 9 shows a longitudinal cross-sectional view of a fitting according to an embodiment of the present invention;
Figure 10 shows an enlarged view of the upper cross-sectional portion of the fitting shown in Figure 9;
Figure 11 shows a longitudinal cross-sectional view of the insert employed in the fitting of Figures 9 and 10;
Figure 12 shows a longitudinal cross-sectional view of the compression seal employed in the fitting of Figures 9 and 10;
Figure 13 shows a longitudinal cross-sectional view of the compression nut employed in the fitting of Figures 9 and 10;
Figure 14A shows a view similar to that of Figure 10 but with a plastic coated metal conduit requiring electrical continuity, placed in the fitting before the compression nut is tightened; and
Figure 14B shows a view similar to that of Figure 14A after the compression nut has been tightened.

### Detailed Description of Certain Embodiments

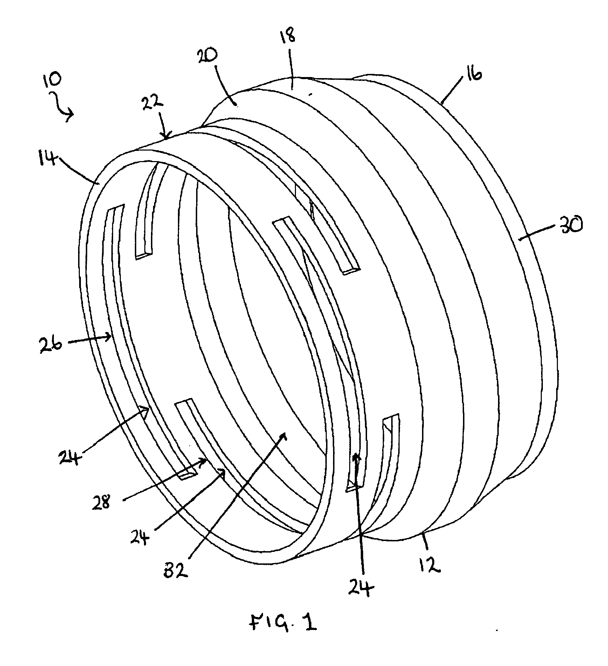

With reference to Figure 1, there is illustrated a compression seal 10 according to an embodiment of the present invention. The compression seal 10 comprises an annular annealed brass trunk 12 having a first end 14, a second end 16 and an outwardly bulbous section 18 therebetween. A sealing surface 20 is provided on an outer portion of the bulbous section 18. A resiliently deformable element 22 is provided adjacent the first end 14 of the trunk 12. In this particular embodiment, the resiliently deformable element 22 comprises four part-annular slots 24. The two of the part-annular slots 24 are provided at a first axial position, adjacent the first end 14, so as to form a first discontinuous ring 26 of slots 24 around the trunk 12. The other two of the part-annular slots 24 are provided at a second axial position, adjacent first ring 26, so as to form a second discontinuous ring 28 of slots 24 around the trunk 12. As illustrated, the first and second rings 26, 28 of slots 24 are rotationally offset such that each slot 24 in each ring 26, 28 axially overlaps with a portion of each of the slots in the adjacent ring 26, 28.

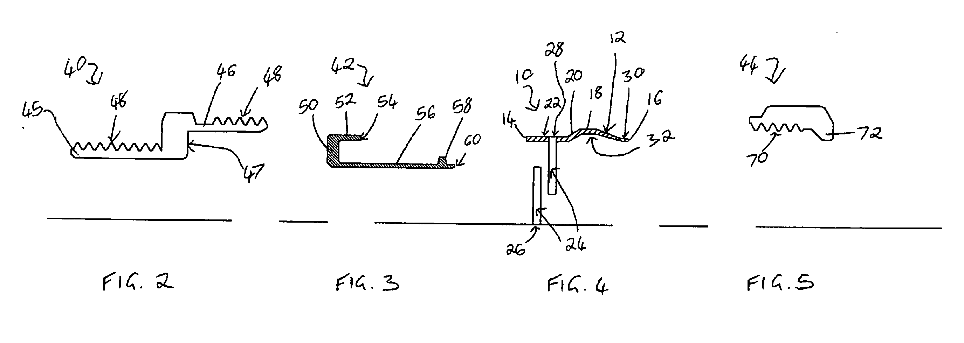

The second end 16 of the trunk 12 is formed into a collar 30 extending in an axial direction. An annular channel 32 is provided in the inner surface of the compression seal 10, radially opposite to the outwardly bulbous section 18. As best illustrated in Figure 4, the bulbous section 18 is substantially in the form of a half hexagon when viewed in cross-section and the sealing surface 20 is provided on a sloped side of the half hexagon closest to the first end 16.

Figures 2, 3, 4 and 5 illustrate, respectively, the individual components of a fitting body 40, a conduit insert 42, the compression seal 10 described above, and a compression nut 44 for use in a fitting in accordance with an embodiment of the present invention, as will be described below. Although only cross-sectional views of the upper halves of the components are illustrated in Figures 2 through 7B, it will be understood that each of the components are symmetrical about a longitudinal axis such that the lower halves are configured as mirror images of the upper halves.

The fitting body 40 of Figure 2 comprises a first hollow cylinder 45 having a first diameter and a second hollow cylinder 46 having a second diameter. In this particular embodiment, the first diameter is less than the second diameter and a radial flange 47 is therefore provided between the first and second cylinders, forming a ledge at the base of the second cylinder 46. Each of the first and second cylinders 45, 46 are provided with a threaded portion 48 on their respective outer surfaces.

As shown in Figure 3, the insert 42 is made from un-annealed brass and comprises a radially flat annular base 50 sized to fit within the second cylinder 46 so that it can abut the radial flange 47. A hollow outer cylindrical shaft 52 extends from the outer circumference of the base 50. The outer cylindrical shaft 52 comprises an axially aligned ribbed outer surface (not shown). A free end 54 of the outer cylindrical shaft 52 is arranged to mate with the first end 14 of the compression seal 10, as will be described below.

A hollow inner cylindrical shaft 56 extends from the inner circumference of the base 50, in the same direction as the outer cylindrical shaft 52. A single spiral projection 58 is provided on the outer surface of the inner cylindrical shaft 56, towards a free end 60 thereof.

Figure 4 shows a cross-sectional view of an upper half of the compression seal 10 illustrated in Figure 1. This view best illustrates the annular channel 32 provided in the inner surface of the compression seal 10, radially opposite to the outwardly bulbous section 18.

As shown in Figure 5, the compression nut 44 is provided with an internal screw-thread 70 configured for screw-fit engagement with the threaded portion 48 on the outer surface of the second cylinder 46 of the body 40. The end of the compression nut 44 furthest from the body 40, when in use, is provided with an inwardly extending radial lip 72.

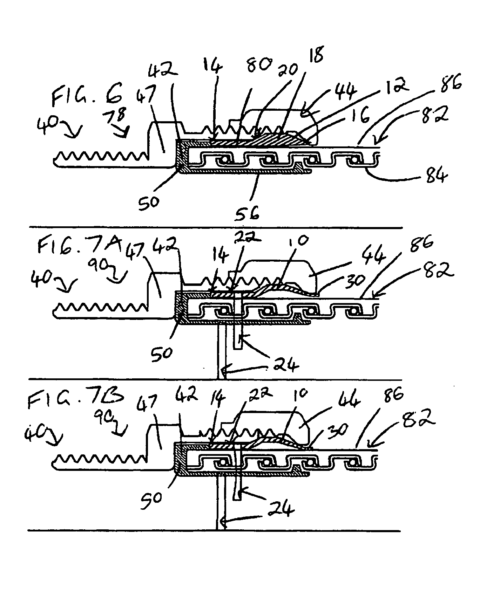

Figure 6 shows a longitudinal cross-sectional view of an upper half of a fitting 78 including the fitting body 40 of Figure 2, the insert 42 of Figure 3 and the compression nut 44 of Figure 5, with a conventional compression seal 80, and with a plastic coated metal conduit 82 (requiring electrical continuity) placed in the fitting 78 and the compression nut 44 tightened. The conventional compression seal 80 is similar to the compression seal 10 according to the present invention except that it does not include a resiliently deformable element 22, a collar 30 or a hollowed-out annular channel 32. Like reference numerals are therefore used to indicate only the trunk 12, the first end 14, the second end 16, the bulbous section 18 and the sealing surface 20.

The conduit 82 comprises a spiral-wound flexible metal tube 84 within a tubular plastic sheath 86. In use, the inner cylindrical shaft 56 of the insert 42 is configured to screw into the metal tube 84 until the end of the tube 84 abuts the annular base 50 of the insert 42. Tightening of the compression nut 44 brings the lip 72 into contact with the bulbous section 18 and thereby forces the sealing surface 20 of the compression seal 80 into contact with end of the fitting body 40. If the components are all accurately sized, the first end 14 of the seal 80 will, at the same time as the sealing surface 20 contacts the body 40, contact the insert 42 to urge it into contact with the radial flange 47 of the body 40 thereby maintaining electrical continuity. However, if any of the body 40, the insert 42 or seal 80 are incorrectly sized (e.g. due to manufacturing tolerances) it may not be possible for the seal 80 to form a contact at the sealing surface 20 and at the first end 14 at the same time. Accordingly, the fitting 78 may either be inadequately sealed or it may include an inadequate electrical continuity.

Figures 7A and 7B illustrate a fitting 90, according to an embodiment of the invention, which is similar to that of Figure 6 but wherein the conventional compression seal 80 has been replaced by the compression seal 10 of Figures 1 and 4. More specifically, Figure 7A shows the fitting 90 prior to the compression nut 44 being tightened and Figure 7B shows the fitting 90 after the compression nut 44 has been tightened. It will be noted that the fitting 90 is capable of providing an electrical and fluid-tight connection between a conduit and a device, enclosure or other conduit (not shown).

As described above, the insert 42 is placed in the body 40 with its annular base 50 adjacent the radial flange 47. The first end 14 of the compression seal 10 is then placed into the body 40 so that the resiliently deformable element 22 is located adjacent the free end 54 of the insert 42 and the sealing surface 20 of the compression seal 10 is adjacent the free end of the body 40. The compression nut 44 is then positioned over the bulbous section 18 of the compression seal 10 and screwed onto the body 40. Upon tightening of the nut 44, the lip 72 will apply an axial force to the compression seal 10 to urge the sealing surface 20 into contact with the free end of the body 40 and at the same time force the resiliently deformable element 22 to flex and compress against the free end 54 of the insert 42. The restoring force generated by the resiliently deformable element 22 in turn urges the insert 42 against the radial flange 47 of the body 40 to secure it thereto. In addition, the lip 72 applies a radial force to the collar 30 of the compression seal 10. Accordingly, the compression seal 10 is designed to provide a front seal between the sealing surface 20 and the body 40 and a rear seal between the collar 30 and the conduit 82 located in the fitting 90.

More, specifically, as shown in Figure 7B, when the compression nut 44 is tightened such that the lip 72 applies an axial force to the compression seal 10 to urge the sealing surface 20 into contact with the free end of the body 40, the material of the seal 10 surrounding the slots 24 is forced to deform into the spaces provided by the slots 24, causing the resiliently deformable element 22 to compress and it is the resilience of this material that ensures that the compression nut 44 transmits force via the seal 10 to the insert 42 to force the insert 42 against the radial flange 47 of the body 40. At the same time, the lip 72 applies a radial force through the second end 16 to the collar 30 of the compression seal 10 such that the collar 30 engages in a flat sealing relationship with the plastic sheath 86.

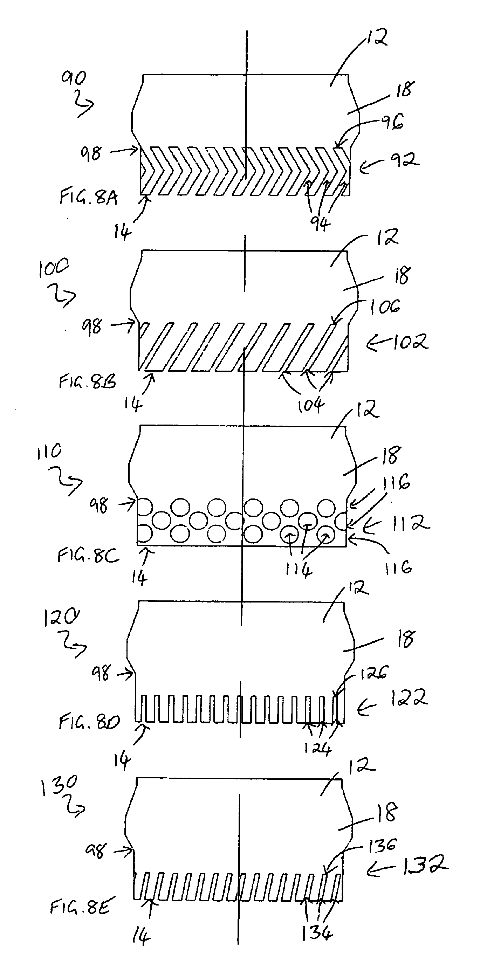

Figures 8A through 8E show compression seals according to further embodiments of the present invention wherein each seal comprises a different resiliently deformable element. The compression seals shown in Figure 8A through 8E are identical to the compression seal 10 shown in Figures 1 and 4 except for the resiliently deformable element and so like reference numerals will be used, where appropriate.

Figure 8A shows a compression seal 90 having a resiliently deformable element 92 comprising a series of axially extending V-shaped slots 94. The slots 94 are open at the first end 14 of the trunk 12 and terminate in a closed end 96 at a first edge 98 of the bulbous section 18. It will be understood that the first edge 98 of the bulbous section 18 is the edge closest to the first end 14.

Figure 8B shows a compression seal 100 having a resiliently deformable element 102 comprising a series of sloped slots 104. The slots 104 are open at the first end 14 of the trunk 12 and terminate in a closed end 106 at the first edge 98 (as defined above in relation to Figure 8A) of the bulbous section 18. It will be noted that the slots 104 are sloped such that they extend in a direction which is not parallel or perpendicular to the first end 14.

Figure 8C shows a compression seal 110 having a resiliently deformable element 112 comprising a series of circular holes 114 disposed in three axially spaced rings 116.
The middle one of the three rings 116 is radially offset with respect to the first and third rings 116 such that the holes 114 in the middle ring 116 are axially disposed adjacent material provided between the holes 114 in the first and third rings 116. In addition, the holes 114 of the middle ring 116 radially overlap in part with the holes 114 in each of the first and third rings 116. The rings 116 extend from adjacent the first end 14 of the trunk 12 to adjacent the first edge 98 (as defined above in relation to Figure 8A) of the bulbous section 18.

Figure 8D shows a compression seal 120 having a resiliently deformable element 122 comprising a series of slots 124. The slots 124 are open at the first end 14 of the trunk 12 and extend perpendicularly therefrom to terminate in a closed end 126 part-way towards the first edge 98 (as defined above in relation to Figure 8A) of the bulbous section 18.

Figure 8E shows a compression seal 130 having a resiliently deformable element 132 comprising a series of sloped slots 134. The slots 134 are open at the first end 14 of the trunk 12 and extend in a sloped direction therefrom to terminate in a closed end 136 part-way towards the first edge 98 (as defined above in relation to Figure 8A) of the bulbous section 18. As above, it will be noted that the slots 134 are sloped such that they extend in a direction which is not parallel or perpendicular to the first end 14.

It will be understood that each of the compression seals described above in relation to Figures 8A through 8E function in the same way as the compression seal 10, when in use. Thus, they function in the same way as described in detail above in relation to Figures 7A and 7B.

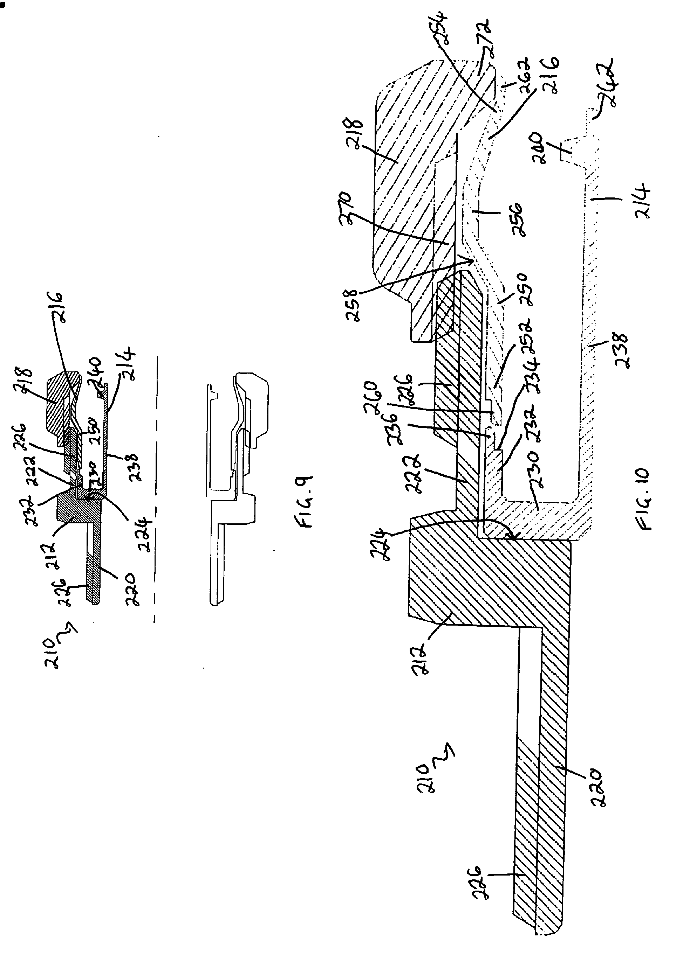

With reference to Figures 9 and 10, there is illustrated a fitting 210 in accordance with an embodiment of the present invention. The fitting 210 is capable of providing an electrical and liquid-tight connection between a conduit and a device, enclosure or other conduit (not shown). The fitting 210 is composed of a fitting body 212, a conduit insert 214, a compression seal 216 and a compression nut 218.

The body 212 comprises a first hollow cylinder 220 having a first diameter and a second hollow cylinder 222 having a second diameter. In this particular embodiment, the first diameter is less than the second diameter and a radial flange 224 is therefore provided between the first and second cylinders, forming a ledge at the base of the second cylinder 222. Each of the first and second cylinders 220, 222 are provided with a threaded portion 226 on their respective outer surfaces.

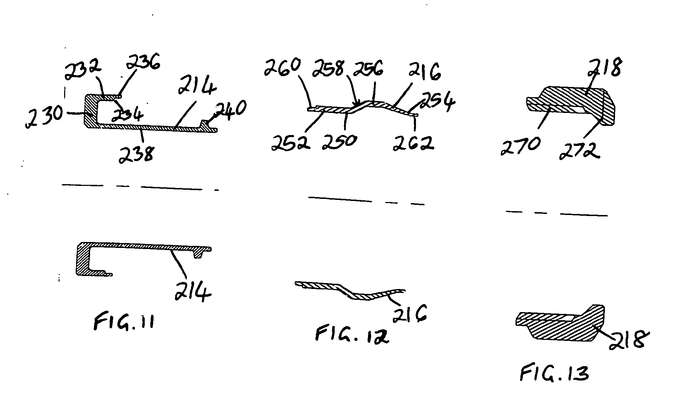

As shown in isolation in Figure 11, the insert 214 is made from un-annealed brass and comprises a radially flat annular base 230 sized to fit within the second cylinder 222 so that it can abut the radial flange 224. A hollow outer cylindrical shaft 232 extends from the outer circumference of the base 230. The outer cylindrical shaft 232 comprises an axially aligned ribbed outer surface (not shown). A free end 234 of the outer cylindrical shaft 232 has an annular projection 236 extending axially therefrom. The projection 236 has a transverse dimension of less than the free end 234 of the shaft 232 so as to allow the projection 236 to flex. In this embodiment, the projection 236 projects from an outer portion of the free end 234 and is continuous.

A hollow inner cylindrical shaft 238 extends from the inner circumference of the base 230, in the same direction as the outer cylindrical shaft 232. A single spiral projection 240 is provided on the outer surface of the inner cylindrical shaft 238, towards a free end 242 thereof.

The compression seal 216 shown in Figures 9, 10, and 12 comprises an annular annealed brass trunk 250 having a first end 252, a second end 254 and an outwardly bulbous section 256 therebetween. A sealing surface 258 is provided on an outer portion of the bulbous section 256. The first end 252 terminates with a tolerance-reduction means in the form of an annular neck 260 projecting axially from the first end 252 of the trunk 250. The neck 260 has a transverse dimension of less than the first end 252 of the trunk 250 so as to allow the neck 260 to flex relative to the first end 252. In this embodiment, the neck 260 projects from an inner portion of the first end 252 and is continuous.

The second end 254 of the trunk 250 is formed into a collar 262 extending in an axial direction. An annular channel 264 is provided in the inner surface of the compression seal 216, radially opposite to the outwardly bulbous section 256. As illustrated, the bulbous section 256 is substantially in the form of a half hexagon when viewed in cross-section and the sealing surface 258 is provided on a sloped side of the half hexagon closest to the first end 252.

As best shown in Figure 13, the compression nut 218 is provided with an internal screw-thread 270 configured for screw-fit engagement with the threaded portion 226 on the outer surface of the second cylinder 222 of the body 212. The end of the compression nut 218 furthest from the body 214, when in use, is provided with an inwardly extending radial lip 272.

As shown in Figures 9 and 10, in use, the insert 214 is placed in the body 212 with its annular base 230 adjacent the radial flange 224. The first end 252 of the compression seal 216 is then placed into the body 212 such that the neck 260 is located adjacent the projection 236 of the insert 214 and the sealing surface 258 of the compression seal 216 is adjacent the free end of the body 212. The compression nut 218 is then positioned over the bulbous section 256 of the compression seal 216 and screwed onto the body 212. Upon tightening of the nut 218, the lip 272 will apply an axial force to the compression seal 216 to urge the sealing surface 258 into contact with the free end of the body 212 and at the same time force the neck 260 and/or the projection 260 to flex to form an overlapping interference fit therebetween. This in turn urges the insert 214 against the radial flange 224 of the body 212 to secure it thereto. In addition, the lip 272 applies a radial force to the collar 262 of the compression seal 216. Accordingly, the compression seal 216 is designed to provide a front seal between the sealing surface 258 and the body 212 and a rear seal between the collar 262 and a conduit located in the fitting 210.

In certain embodiments, the fitting 210 may be employed to connect two electrically conductive conduits. In other embodiments, the fitting 210 may be employed to connect one electrically conductive conduit to a device or enclosure.

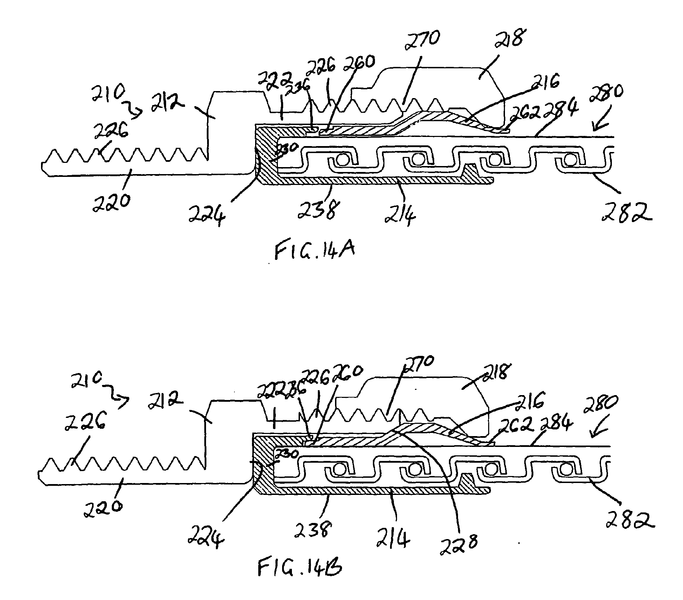

Figures 14A and 14B show a view similar to that of Figure 10 but with a plastic coated metal conduit 280 requiring electrical continuity, placed in the fitting 210. Accordingly, like reference numerals will be used. More specifically, Figure 14A illustrates the assembly before the compression nut 218 is tightened and Figure 14B illustrates the assembly after the compression nut 218 has been tightened.

The conduit 280 comprises a spiral-wound flexible metal tube 282 within a tubular plastic sheath 284. In use, the inner cylindrical shaft 238 of the insert 214 is configured to screw into the metal tube 282 until the end of the tube 282 abuts the annular base 230 of the insert 214. As described above in relation to the fitting 210, tightening of the compression nut 218 forces the compression seal 216 into contact with the insert 214 and this urges the insert 214 into contact with the radial flange 224 of the body 212 thereby maintaining electrical continuity. More, specifically, as shown in Figure 14B, when the compression nut 218 is tightened such that the lip 272 applies an axial force to the compression seal 216 to urge the sealing surface 258 into contact with the free end of the body 212, the neck 260 is forced between the plastic sheath 284 and the projection 236, causing the projection 236 to flex into an overlapping interference fit. This ensures that the compression nut 218 transmits force via the seal 216 to the insert 214 to force the insert 214 against the radial flange 224 of the body 212. At the same time, the lip 272 applies a radial force through the second end 254 to the collar 262 of the compression seal 216 such that the collar 262 engages in a flat sealing relationship with the plastic sheath 284.

It will be appreciated by persons skilled in the art that various modifications may be made to the above embodiments without departing from the scope of the present invention. For example, whilst the above discussion has been primarily concerned with maintaining an electrical connection, the invention is equally applicable to other applications.

## Claims

1. A compression seal for a conduit fitting comprising a body and an insert, the compression seal comprising:
an annular trunk having a first end, a second end and an outwardly bulbous section therebetween;
a sealing surface provided on an outer portion of said bulbous section; and
wherein a resiliently deformable element is provided at or adjacent the first end of the trunk.

2. The seal according to claim 1 wherein the resiliently deformable element comprises one or more slots or holes provided adjacent the first end of the trunk.

3. The seal according to claim 2 wherein two or more part-annular slots are provided at the same axial position so as to form a discontinuous ring of slots around the trunk.

4. The seal according to claim 3 wherein two or more discontinuous rings of slots are provided, each spaced axially from the other and arranged such that only a portion of each slot is axially aligned with a portion of an adjacent slot.

5. The seal according to any preceding claim wherein the resiliently deformable element comprises a tolerance-reduction means arranged, in use, to provide an overlap with the insert, in one or both of an axial and a radial direction.

6. The seal according to claim 5 wherein, the tolerance-reduction means is constituted by an annular neck projecting axially from the first end of the trunk.

7. The seal according to any preceding claim wherein the second end of the trunk is formed into a collar extending in an axial direction.

8. The seal according to any preceding claim wherein an annular channel is provided in the inner surface of the compression seal, radially opposite to the outwardly bulbous section.

9. The seal according to any preceding claim wherein the bulbous section is substantially in the form of a half hexagon when viewed in cross-section.

10. A fitting comprising a body, an insert and the compression seal according to any preceding claim.

11. The fitting according to claim 10 wherein the body comprises a first hollow cylinder having a first diameter and a second hollow cylinder having a second diameter, the first and second diameters being different such that a radial flange is provided therebetween.

12. The fitting according to claim 11 wherein the insert comprises a radially flat annular base sized to fit within one of the first or second cylinders of the body and to abut the radial flange thereof; and a hollow outer cylindrical shaft extends from the outer circumference of the base.

13. The fitting according to claim 12 wherein a free end of the outer cylindrical shaft comprises an annular projection arranged to mate with the first end of the compression seal, when in use.

14. The fitting according to any one of claims 10 to 14 further comprising a compression nut configured for screw-fit engagement with the larger of the first or second cylinders of the body and wherein the end of the compression nut furthest from the body, when in use, is provided with an inwardly extending radial lip.

15. An assembly comprising a first conduit, a second conduit and the fitting according to any one of claims 10 to 14 therebetween.
